# EUROPEAN PATENT APPLICATION

(11) **EP 4 679 902 A1**
(43) Date of publication of application: **14.01.2026**
(21) Application number: 25188479.7
(22) Date of filing: 09.07.2025
(51) Int. Cl.: H04W 64/00, H04W 74/0833, G01S 11/02

(54) **ENHANCEMENTS TO RANGING AND REPORTING IN WIRELESS COMMUNICATIONS**

(30) Priority: 11.07.2024 US 202463669743 P; 08.07.2025 US 202519263315
(71) Applicant: MEDIATEK INC., Hsinchu City 30078 (TW)
(72) Inventor: SUN, Li-Hsiang, San Jose (US); MA, Li, San Jose (US); YEE, James Chih-Shi, San Jose (US)
(74) Representative: Hoefer & Partner Patentanwälte mbB

(57) **Abstract**

Techniques pertaining to enhancements to ranging and reporting in wireless communications are described. An apparatus, e.g., an initiator, performs a one-to-many contention-based ranging operation by: -a- generating a one-to-many initiator report (512); and -b- transmitting the one-to-many initiator report to a responder (514). The one-to-many initiator report contains a resolvable private address, RPA, hash calculated using an identity resolving key, IRK, of one of the responder.

## Description

### CROSS REFERENCE TO RELATED PATENT APPLICATION

The present disclosure is part of a non-provisional patent application claiming the priority benefit of U.S. Provisional Patent Application No. 63/669,743, filed 11 July 2024, the content of which herein being incorporated by reference in its entirety.

### TECHNICAL FIELD

The present disclosure is generally related to wireless communications and, more particularly, to enhancements to ranging and reporting in wireless communications.

### BACKGROUND

Unless otherwise indicated herein, approaches described in this section are not prior art to the claims listed below and are not admitted as prior art by inclusion in this section.

In wireless communications such as Bluetooth, Zigbee, Ultra-Wideband (UWB), Wireless Body Area Networks (WBANs) and Low-Rate Wireless Personal Area Networks (LR-WPANs) under the Institute of Electrical and Electronics Engineers (IEEE) 802.15 specifications, in the context of contention-based one-to-many multi-millisecond (MMS) ranging, when an initiator uses a One-to-many Poll Compact frame with a message control field value 0x60 in the first ranging sub-round, then in subsequent sub-rounds the order of transmission is reversed (i.e., the responder(s) would send first). Each responder contends for access to the transmission medium by randomly choosing the ranging sub-round in which to attempt to respond and, if this is not the first sub-round, the responder contends to transmit the one-to-many response compact frame, and the initiator sends its One-to-many Poll Compact frame in reply. In this scenario, however, the initiator does not identify the responder among multiple responders that wins the contention.

On the other hand, in the context of fragmentation with compression, currently channel impulse report (CIR) taps are compressed per transmit (Tx)/receive (Rx) antenna pair (Antenna, Segment), which enables decompression on per Receive Report basis. A given receive report (RR) can be split into two segments/part (e.g., RR-2(1), RR-2(2)) to be carried in two physical-layer (PHY) service data units (PSDUs) (e.g., 1^{st} report fragment, 2^{nd} report fragment). The 1^{st} report segment (e.g., RR-2(1)) has a Receive Report Description (RRD) while the 2^{nd} report segment (e.g., RR-2(2)) does not. However, in case that a receiver did not receive an earlier fragment, it would not be able to decide whether the 1^{st} RR of the subsequently received fragment/PSDU is a complete RR (e.g., RR-16) or a segment of a RR (e.g., RR-2(2)). Without this information, the remaining information in the PSDU cannot be parsed or decompressed. Moreover, in case that a receiver does not receive a later segment, it would not be able to decide whether the last RR is a compete RR in order to start decompression.

Therefore, there is a need for a solution of enhancements to ranging and reporting in wireless communications.

### SUMMARY

The following summary is illustrative only and is not intended to be limiting in any way. That is, the following summary is provided to introduce concepts, highlights, benefits and advantages of the novel and non-obvious techniques described herein. Select implementations are further described below in the detailed description. Thus, the following summary is not intended to identify essential features of the claimed subject matter, nor is it intended for use in determining the scope of the claimed subject matter.

An objective of the present disclosure is to provide schemes, concepts, designs, techniques, methods, and apparatuses pertaining to enhancements to ranging and reporting in wireless communications. It is believed that various schemes proposed herein may address or otherwise alleviate these aforementioned issue(s). Methods according to the invention are defined in the independent claims. The dependent claims define preferred embodiments thereof.

In one aspect, a method may involve an initiator performing a one-to-many contention-based ranging operation by: (a) generating a one-to-many initiator report; and (b) transmitting the one-to-many initiator report to a responder. The one-to-many initiator report may contain a resolvable private address (RPA) hash calculated using an identity resolving key (IRK) of one of the responder.

In another aspect, a method may involve a responder performing a one-to-many contention-based ranging operation by: (a) receiving a one-to-many poll from an initiator; (b) transmitting a response to the initiator immediately prior or responsive to receiving the one-to-many poll; (c) performing a UWB packet transmission and reception with the initiator; and (d) receiving a one-to-many initiator report. The one-to-many initiator report may contain an RPA hash calculated using an IRK of the responder or another responder.

In still another aspect, a method may involve an apparatus receiving a PSDU as part of a CIR with CIR report taps compressed to enable decompression on a per RR basis. The method may also involve the apparatus determining whether the PSDU contains a complete RR or a part of the complete RR based on an indication contained in the PSDU.

It is noteworthy that, although the description provided herein may be in the context of certain radio access technologies, networks and network topologies such as, IEEE 802.15-compliant wireless networks, the proposed concepts, schemes and any variation(s)/derivative(s) thereof may be implemented in, for and by other types of radio access technologies, networks and network topologies such as, for example and without limitation, Wi-Fi under IEEE 802.11, 5^{th} Generation (5G)/New Radio (NR), 6^{th} Generation (6G), Long-Term Evolution (LTE), LTE-Advanced, LTE-Advanced Pro, Internet-of-Things (IoT), Industrial IoT (IIoT) and narrowband IoT (NB-IoT). Thus, the scope of the present disclosure is not limited to the examples described herein.

### BRIEF DESCRIPTION OF THE DRAWINGS

The accompanying drawings are included to provide a further understanding of the disclosure and are incorporated in and constitute a part of the present disclosure. The drawings illustrate implementations of the disclosure and, together with the description, serve to explain the principles of the disclosure. It is appreciable that the drawings are not necessarily in scale as some components may be shown to be out of proportion than the size in actual implementation to clearly illustrate the concept of the present disclosure.
FIG. 1 is a diagram of an example network environment in which various schemes in accordance with the present disclosure may be implemented.
FIG. 2 is a diagram of an example design under a proposed scheme in accordance with the present disclosure.
FIG. 3 is a diagram of an example design under a proposed scheme in accordance with the present disclosure.
FIG. 4 is a block diagram of an example communication system under a proposed scheme in accordance with the present disclosure.
FIG. 5 is a flowchart of an example process under a proposed scheme in accordance with the present disclosure.
FIG. 6 is a flowchart of an example process under a proposed scheme in accordance with the present disclosure.
FIG. 7 is a flowchart of an example process under a proposed scheme in accordance with the present disclosure.

### DETAILED DESCRIPTION

Detailed embodiments and implementations of the claimed subject matters are disclosed herein. However, it shall be understood that the disclosed embodiments and implementations are merely illustrative of the claimed subject matters which may be embodied in various forms. The present disclosure may, however, be embodied in many different forms and should not be construed as limited to the exemplary embodiments and implementations set forth herein. Rather, these exemplary embodiments and implementations are provided so that the description of the present disclosure is thorough and complete and will fully convey the scope of the present disclosure to those skilled in the art. In the description below, details of well-known features and techniques may be omitted to avoid unnecessarily obscuring the presented embodiments and implementations.

### Overview

Implementations in accordance with the present disclosure relate to various techniques, methods, schemes and/or solutions pertaining to enhancements to ranging and reporting in wireless communications. According to the present disclosure, a number of possible solutions may be implemented separately or jointly. That is, although these possible solutions may be described below separately, two or more of these possible solutions may be implemented in one combination or another.

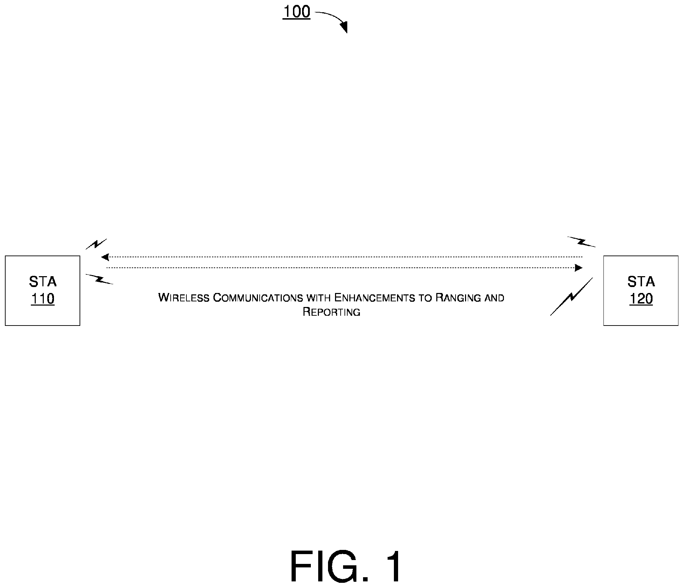

FIG. 1 illustrates an example network environment 100 in which various solutions and schemes in accordance with the present disclosure may be implemented. FIG. 1 - FIG. 7 illustrate examples of implementation of various proposed schemes in network environment 100 in accordance with the present disclosure. The following description of various proposed schemes is provided with reference to FIG. 1 - FIG. 7.

Referring to FIG. 1, network environment 100 may include at least a first device (STA 110) and a second device (STA 120). Either STA 110 or STA 120 may be an initiator while the other may be a responder. While there may be additional devices involved in network environment 100 under one or more schemes proposed herein, for simplicity only two devices (STA 110 and STA 120) are shown in FIG. 1 with the understanding that additional devices may be involved. Each of STA 110 and STA 120 may be configured to implement various proposed schemes in accordance with the present disclosure as described below. For instance, in some implementations, STA 110 may function as an initiator and STA 120 may function as a responder, or vice versa. It is noteworthy that, while the various proposed schemes may be individually or separately described below, in actual implementations some or all of the proposed schemes may be utilized or otherwise implemented jointly. Of course, each of the proposed schemes may be utilized or otherwise implemented individually or separately.

In the context of wireless communications, CIR report taps are a key concept for understanding and modeling how signals propagate. The CIR describes how a wireless channel responds to an impulse signal, which is typically a short and high-energy signal. It captures the effects of multipath propagation, where signals bounce off objects and arrive at a receiver at different times with varying amplitudes and phases. To simulate the effects of multipath fading, wireless communication systems often use models that include a delay line with "taps." A tap, in this context, is a point on the delay line corresponding to a certain delay. The signals from each tap are combined to represent the composite signal that the receiver actually receives, and each tap in the model corresponds to a specific path the signal takes, characterized by its amplitude and delay. CIR report taps may be used for channel modeling, simulation, and rake receiver design.

In the scenario described above regarding contention-based one-to-many MMS ranging, only the initiator calculates the distance between itself and each responder. Nevertheless, each responder is also allowed to calculate the distance by receiving a one-to-many initiator report in the report phase. The resolvable private address (RPA) hash of this report message is calculated using the initiator's identity resolving key (IRK) according to the current IEEE 802.15 specification. In an event that more than two responders each transmits a Response frame in the same sub-round, and one of the response frames is decoded by the initiator (e.g., frame sequence check (FCS)), then it means the responder that sent the response frame decoded by the initiator is very close (or closer) to the initiator compared to the other responder. The other responder, which is assumed to be farther away from the initiator (herein the "far responder"), would consider the one-to-many initiator report to be intended for itself, thereby resulting in wrong calculation at the far responder.

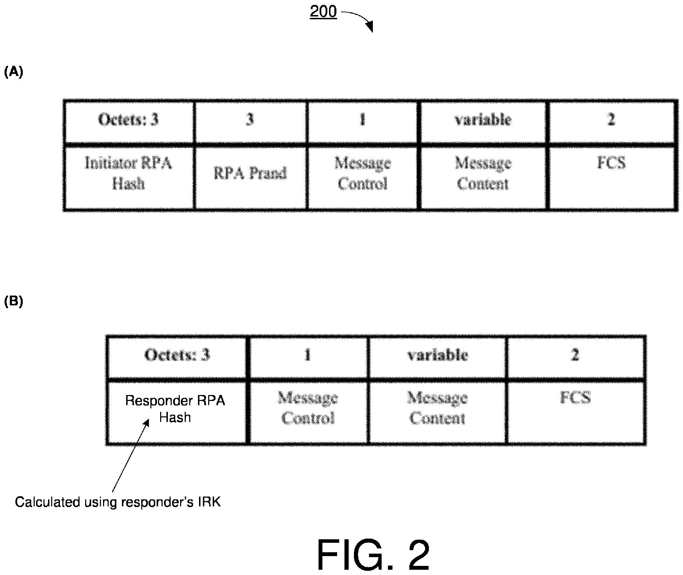

FIG. 2 illustrates an example design 200 under a proposed scheme in accordance with the present disclosure. In a contention-based one-to-many MMS ranging operation, a one-to-many poll (e.g., One-to-many Poll Compact frame) may be sent by an initiator during a control phase in the one-to-many MMS ranging. This serves to enable carrier coherent transmissions from the initiator to one or more responder devices and may also convey short-term operating parameters (e.g., from the initiator to the responder device(s)). The Compact Frame Content field of the One-to-many Poll Compact frame may be formatted as shown in part (A) of FIG. 2. One-to-many poll may be transmitted before or after receiving a Response frame from each of one or more responder devices (with the Response frame indicating/containing the IRK of the respective responder), then the initiator and one or more responders may enter a ranging phase to perform UWB MMS transmission and reception. After the ranging phase, the initiator may transmit a One-to-many Initiator Report Compact frame during a report phase in the one-to-many MMS ranging. The Compact Frame Content field of the One-to-many Initiator Report Compact frame may be formatted as shown in part (B) of FIG. 2.

Under the proposed scheme, a one-to-many initiator report (e.g., the One-to-many Initiator Report Compact frame) may contain a responder RPA hash (instead of initiator RPA hash), which may be calculated using the responder's IRK (e.g., one of multiple responders the Response frame of which was decoded by the initiator) instead of the initiator's IRK, thereby resolving the aforementioned issue. For instance, the initiator may first obtain (or assign) the IRK of each responder via a previous setup procedure or an out-of-band procedure, calculate an RPA hash of the one-to-many initiator report based on the responder's IRK and RPA Prand in the previously transmitted One-to-many Poll Compact frame, and then transmit the one-to-many initiator report with the RPA hash thus calculated. Among the multiple responders receiving such one-to-many initiator report, it is the responder the IRK of which was used in calculating the RPA hash may be able to correctly calculate the distance between itself and the initiator.

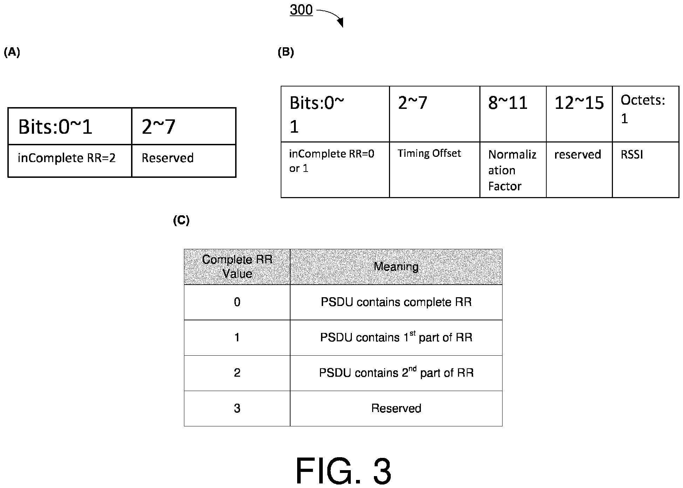

Under another proposed scheme in accordance with the present disclosure with respect to fragmentation with compression, an indication may be used to indicate whether a given PSDU contains a complete RR or a part/segment of a RR. For instance, one or two bits at the start of a PSDU may be utilized to provide such indication. FIG. 3 illustrates an example design 300 under a proposed scheme in accordance with the present disclosure. Part (A) of FIG. 3 shows one example of a PSDU contains 2^{nd} part of RR such that additional information in the RRD carried in the previous part of RR is omitted, and part (B) of FIG. 3 shows another example of a PSDU contains a complete RR, a 1^{st} part of RR and RRD contains addition info (Timing offset, Normalization Factor, ...). Part (C) of FIG. 3 shows example interpretation of the value of bits 0 ~ 1 which are used for indication. For instance, a decimal value of "0" may indicate that the PSDU contains a complete RR. A decimal value of "1" may indicate that the PSDU contains the 1^{st} part of the RR. A decimal value of "2" may indicate that the PSDU contains the 2^{nd} part of the RR. The meaning of a decimal value of "3" may be reserved. Under the proposed scheme, this indication (e.g., bits 0 ~ 1) may be in the Report Identity Control (RIC) field of the PSDU. Alternatively, this indication may be in the Receive Report Control (RRC) field of the PSDU. Alternatively, this indication may be in the Receive Report Description (RRD) field with the RRD field included in a segment of a RR. For example, the RRD bits may be rearranged such that currently reserved bit(s) may be moved to the front to serve as this indication. As another example, the RRD field may be shorter in case the indication indicates that it is a 2^{nd} segment of a RR that is contained in the PSDU. In any case, one or more indication bits may be utilized to indicate whether the RR is complete, is a 1^{st} part of the RR or a 2^{nd} part of the RR, and the RRD field (or RRC field or RIC field), which has the indication bits, may be included in each part of a RR.

As an implementable example, the RRC field may be present in all RRs and, in case that a report is fragmented or is compressed, the CIR Taps Length field may be present in all RRs. When a RR is divided into two parts and carried in two different CIR Report IEs, the RRC field (including the CIR Taps Length field) may be present in each part of the RR in its entirety. That is, the RRC field may not be split across two CIR Report IEs.

### Illustrative Implementations

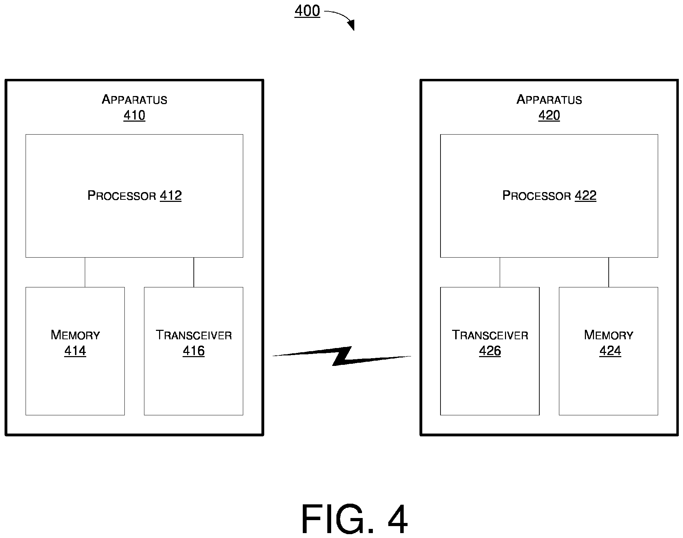

FIG. 4 illustrates an example system 400 having at least an example apparatus 410 and an example apparatus 420 in accordance with an implementation of the present disclosure. Each of apparatus 410 and apparatus 420 may perform various functions to implement schemes, techniques, processes and methods described herein pertaining to enhancements to ranging and reporting in wireless communications, including the various schemes described above with respect to various proposed designs, concepts, schemes, systems and methods described above as well as processes described below. For instance, apparatus 410 may be implemented in STA 110 and apparatus 420 may be implemented in STA 120, or vice versa.

Each of apparatus 410 and apparatus 420 may be a part of an electronic apparatus, such as a portable or mobile apparatus, a wearable apparatus, a wireless communication apparatus or a computing apparatus. When implemented in a STA, each of apparatus 410 and apparatus 420 may be implemented in a smartphone, a smart watch, a personal digital assistant, a digital camera, or a computing equipment such as a tablet computer, a laptop computer or a notebook computer. Each of apparatus 410 and apparatus 420 may also be a part of a machine type apparatus, which may be an IoT apparatus such as an immobile or a stationary apparatus, a home apparatus, a wire communication apparatus or a computing apparatus. For instance, each of apparatus 410 and apparatus 420 may be implemented in a smart thermostat, a smart fridge, a smart door lock, a wireless speaker or a home control center.

In some implementations, each of apparatus 410 and apparatus 420 may be implemented in the form of one or more integrated-circuit (IC) chips such as, for example and without limitation, one or more single-core processors, one or more multi-core processors, one or more reduced-instruction set computing (RISC) processors, or one or more complex-instruction-set-computing (CISC) processors. In the various schemes described above, each of apparatus 410 and apparatus 420 may be implemented in or as a controller/initiator or a controlee/responder. Each of apparatus 410 and apparatus 420 may include at least some of those components shown in FIG. 4 such as a processor 412 and a processor 422, respectively, for example. Each of apparatus 410 and apparatus 420 may further include one or more other components not pertinent to the proposed scheme of the present disclosure (e.g., internal power supply, display device and/or user interface device), and, thus, such component(s) of apparatus 410 and apparatus 420 are neither shown in FIG. 4 nor described below in the interest of simplicity and brevity.

In one aspect, each of processor 412 and processor 422 may be implemented in the form of one or more single-core processors, one or more multi-core processors, one or more RISC processors or one or more CISC processors. That is, even though a singular term "a processor" is used herein to refer to processor 412 and processor 422, each of processor 412 and processor 422 may include multiple processors in some implementations and a single processor in other implementations in accordance with the present disclosure. In another aspect, each of processor 412 and processor 422 may be implemented in the form of hardware (and, optionally, firmware) with electronic components including, for example and without limitation, one or more transistors, one or more diodes, one or more capacitors, one or more resistors, one or more inductors, one or more memristors and/or one or more varactors that are configured and arranged to achieve specific purposes in accordance with the present disclosure. In other words, in at least some implementations, each of processor 412 and processor 422 is a special-purpose machine specifically designed, arranged and configured to perform specific tasks including those pertaining to enhancements to ranging and reporting in wireless communications in accordance with various implementations of the present disclosure.

In some implementations, apparatus 410 may also include a transceiver 416 coupled to processor 412. Transceiver 416 may include a transmitter capable of wirelessly transmitting and a receiver capable of wirelessly receiving data. In some implementations, apparatus 420 may also include a transceiver 426 coupled to processor 422. Transceiver 426 may include a transmitter capable of wirelessly transmitting and a receiver capable of wirelessly receiving data. It is noteworthy that, although transceiver 416 and transceiver 426 are illustrated as being external to and separate from processor 412 and processor 422, respectively, in some implementations, transceiver 416 may be an integral part of processor 412 as a system on chip (SoC) and/or transceiver 426 may be an integral part of processor 422 as a SoC.

In some implementations, apparatus 410 may further include a memory 414 coupled to processor 412 and capable of being accessed by processor 412 and storing data therein. In some implementations, apparatus 420 may further include a memory 424 coupled to processor 422 and capable of being accessed by processor 422 and storing data therein. Each of memory 414 and memory 424 may include a type of random-access memory (RAM) such as dynamic RAM (DRAM), static RAM (SRAM), thyristor RAM (T-RAM) and/or zero-capacitor RAM (Z-RAM). Alternatively, or additionally, each of memory 414 and memory 424 may include a type of read-only memory (ROM) such as mask ROM, programmable ROM (PROM), erasable programmable ROM (EPROM) and/or electrically erasable programmable ROM (EEPROM). Alternatively, or additionally, each of memory 414 and memory 424 may include a type of non-volatile random-access memory (NVRAM) such as flash memory, solid-state memory, ferroelectric RAM (FeRAM), magnetoresistive RAM (MRAM) and/or phase-change memory.

Each of apparatus 410 and apparatus 420 may be a communication entity capable of communicating with each other using various proposed schemes in accordance with the present disclosure. For illustrative purposes and without limitation, a description of capabilities of apparatus 410 or apparatus 420, as STA 110 and STA 120, respectively, is provided below in the context of example processes 500, 600 and 700. It is noteworthy that, although a detailed description of capabilities, functionalities and/or technical features of either of apparatus 410 and apparatus 420 is provided below, the same may be applied to the other of apparatus 410 and apparatus 420 although a detailed description thereof is not provided solely in the interest of brevity.

### Illustrative Processes

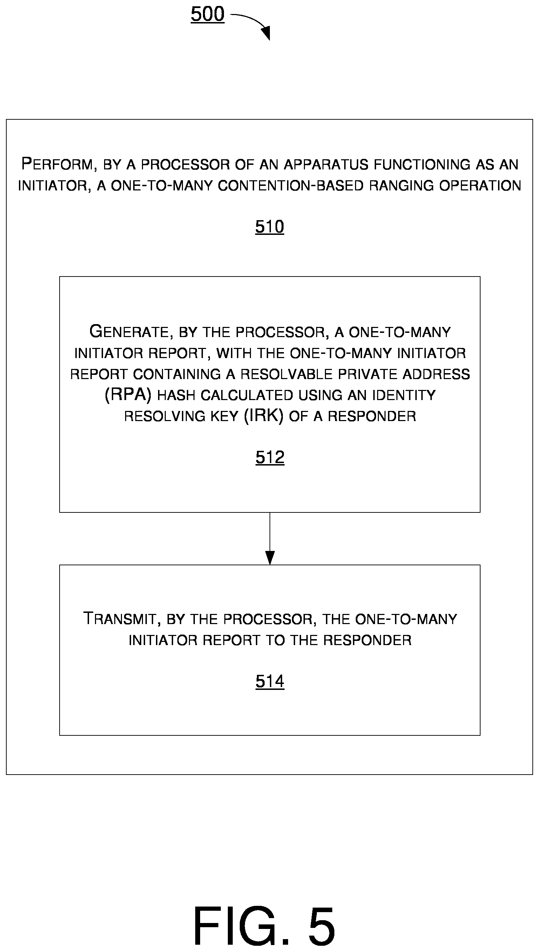

FIG. 5 illustrates an example process 500 in accordance with an implementation of the present disclosure. Process 500 may represent an aspect of implementing various proposed designs, concepts, schemes, systems, and methods described above. More specifically, process 500 may represent an aspect of the proposed concepts and schemes pertaining to enhancements to ranging and reporting in wireless communications. Process 500 may include one or more operations, actions, or functions as illustrated by one or more of blocks/subblocks. Although illustrated as discrete blocks, various blocks of process 500 may be divided into additional blocks, combined into fewer blocks, or eliminated, depending on the desired implementation. Moreover, the blocks/sub-blocks of process 500 may be executed in the order shown in FIG. 5 or, alternatively, in a different order. Furthermore, one or more of the blocks/sub-blocks of process 500 may be executed repeatedly or iteratively. Process 500 may be implemented by or in apparatus 410 and apparatus 420 as well as any variations thereof. Solely for illustrative purposes and without limiting the scope, process 500 is described below in the context of apparatus 410 and implemented in or as STA 110 and apparatus 420 implemented in or as STA 120 in network environment 100, or vice vera, in accordance with one or more of IEEE 802.15 standards. Process 500 may begin at block 510.

At 510, process 500 may include processor 412 of apparatus 410 (functioning as an initiator) performing, via transceiver 416, a one-to-many contention-based ranging. The one-to-many contention-based ranging may involve operations represented by 512 and 514.

At 512, process 500 may involve processor 412 generating a one-to-many initiator report. Process 500 may proceed from 512 to 514.

At 514, process 500 may involve processor 412 transmitting, via transceiver 416, the one-to-many initiator report to a responder. The one-to-many initiator report may contain an RPA hash calculated using an IRK of the responder.

In some implementations, in performing the one-to-many contention-based ranging operation, process 500 may further involve processor 412 performing, prior to generating and transmitting the one-to-many initiator report, certain operations. For instance, process 500 may involve processor 412 transmitting, via transceiver 416, a one-to-many poll to one or more responders including the responder. Moreover, process 500 may involve processor 412 receiving, via transceiver 416, a response from at least one responder of the one or more responders immediately prior or responsive to transmitting the one-to-many poll.

In some implementations, in generating the one-to-many initiator report, process 500 may involve processor 412 performing certain operations. For instance, process 500 may involve processor 412 decoding the response from the at least one responder (e.g., the responder at 514). Additionally, process 500 may involve processor 412 calculating the RPA hash using a respective IRK of the at least one responder in generating the one-to-many initiator report.

In some implementations, in performing the one-to-many contention-based ranging operation, process 500 may involve processor 412 performing a contention-based one-to-many MMS ranging operation.

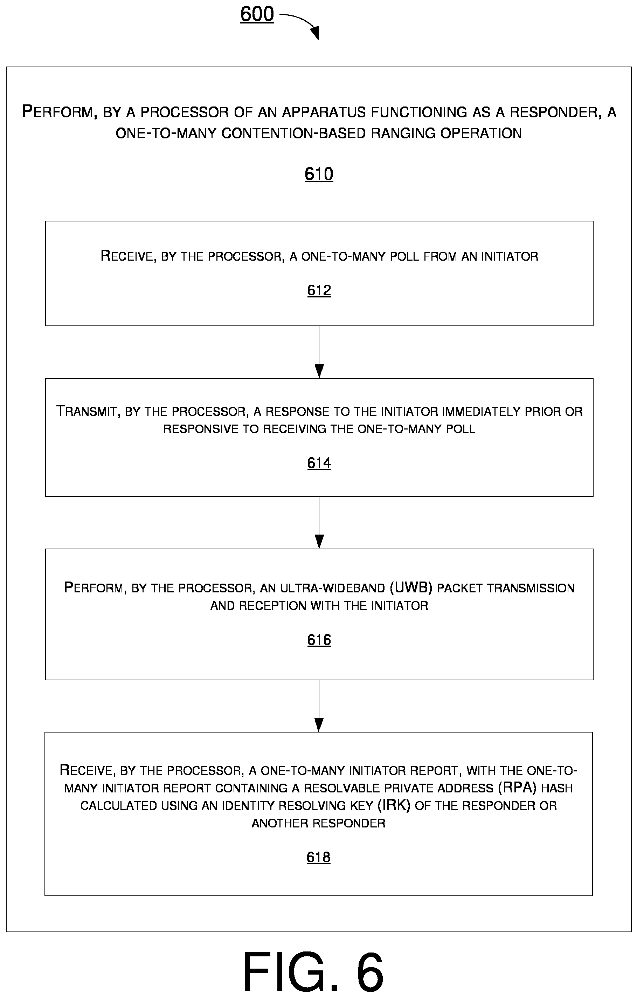

FIG. 6 illustrates an example process 600 in accordance with an implementation of the present disclosure. Process 600 may represent an aspect of implementing various proposed designs, concepts, schemes, systems, and methods described above. More specifically, process 600 may represent an aspect of the proposed concepts and schemes pertaining to enhancements to ranging and reporting in wireless communications. Process 600 may include one or more operations, actions, or functions as illustrated by one or more of blocks/subblocks. Although illustrated as discrete blocks, various blocks of process 600 may be divided into additional blocks, combined into fewer blocks, or eliminated, depending on the desired implementation. Moreover, the blocks/sub-blocks of process 600 may be executed in the order shown in FIG. 6 or, alternatively, in a different order. Furthermore, one or more of the blocks/sub-blocks of process 600 may be executed repeatedly or iteratively. Process 600 may be implemented by or in apparatus 410 and apparatus 420 as well as any variations thereof. Solely for illustrative purposes and without limiting the scope, process 600 is described below in the context of apparatus 410 and implemented in or as STA 110 and apparatus 420 implemented in or as STA 120 in network environment 60, or vice vera, in accordance with one or more of IEEE 802.15 standards. Process 600 may begin at block 610.

At 610, process 600 may include processor 422 of apparatus 420 (functioning as a responder) performing, via transceiver 426, a one-to-many contention-based ranging operation. The one-to-many contention-based ranging may involve operations represented by 612, 614, 616 and 618.

At 612, process 600 may involve processor 422 receiving, via transceiver 426, a one-to-many poll from an initiator (e.g., apparatus 410). Process 600 may proceed from 612 to 614.

At 614, process 600 may involve processor 422 transmitting, via transceiver 426, a response to the initiator immediately prior or responsive to receiving the one-to-many poll. Process 600 may proceed from 614 to 616.

At 616, process 600 may involve processor 422 performing a UWB packet transmission and reception with the initiator. Process 600 may proceed from 616 to 618.

At 618, process 600 may involve processor 422 receiving, via transceiver 426, a one-to-many initiator report. The one-to-many initiator report may contain an RPA hash calculated using an IRK of the responder or another responder.

In some implementations, in performing the one-to-many contention-based ranging operation, process 600 may further involve processor 422 determining a distance between the responder and the initiator based on the one-to-many initiator report.

In some implementations, in performing the one-to-many contention-based ranging operation, process 600 may involve processor 422 performing a contention-based one-to-many MMS ranging operation.

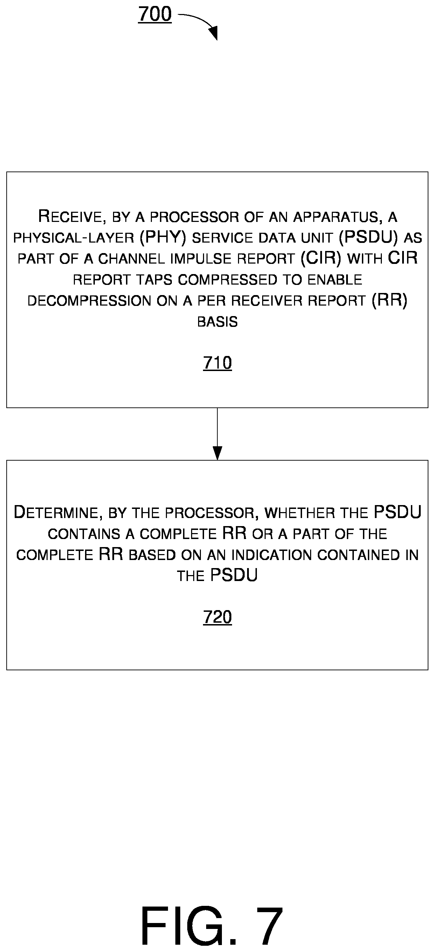

FIG. 7 illustrates an example process 700 in accordance with an implementation of the present disclosure. Process 700 may represent an aspect of implementing various proposed designs, concepts, schemes, systems, and methods described above. More specifically, process 700 may represent an aspect of the proposed concepts and schemes pertaining to enhancements to ranging and reporting in wireless communications. Process 700 may include one or more operations, actions, or functions as illustrated by one or more of blocks/subblocks. Although illustrated as discrete blocks, various blocks of process 700 may be divided into additional blocks, combined into fewer blocks, or eliminated, depending on the desired implementation. Moreover, the blocks/sub-blocks of process 700 may be executed in the order shown in FIG. 7 or, alternatively, in a different order. Furthermore, one or more of the blocks/sub-blocks of process 700 may be executed repeatedly or iteratively. Process 700 may be implemented by or in apparatus 410 and apparatus 420 as well as any variations thereof. Solely for illustrative purposes and without limiting the scope, process 700 is described below in the context of apparatus 410 and implemented in or as STA 110 and apparatus 420 implemented in or as STA 120 in network environment 70, or vice vera, in accordance with one or more of IEEE 802.15 standards. Process 700 may begin at block 710.

At 710, process 700 may include processor 412 of apparatus 410 receiving, via transceiver 416, a PSDU as part of a CIR with CIR report taps compressed to enable decompression on a per RR basis. Process 700 may proceed from 710 to 720.

At 720, process 700 may involve processor 412 determining whether the PSDU contains a complete RR or a part of the complete RR based on an indication contained in the PSDU.

In some implementations, the indication may include two bits at a start of the PSDU.

In some implementations, the indication may indicate whether the PSDU contains the complete RR, a first part of the RR, or a second part of the RR.

In some implementations, the indication may be in a RIC field carried in the PSDU.

In some implementations, the indication may be in a RRC field carried in the PSDU.

In some implementations, the indication may be in a RRD field included in a segment of the RR. In some implementations, RRD bits may be rearranged with one or more reserved bits moved to a front of the RR to serve as the indication. In some implementations, a length of the RRD field may be relatively shorter in an event that the indication indicates that the PSDU contains a 2^{nd} fragment of the complete RR, while the length of the RRD field may be relatively longer in an event that the indication indicates that the PSDU contains the complete RR or a 1^{st} fragment.

### Additional Notes

The herein-described subject matter sometimes illustrates different components contained within, or connected with, different other components. It is to be understood that such depicted architectures are merely examples, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

Further, with respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

Moreover, it will be understood by those skilled in the art that, in general, terms used herein, and especially in the appended claims, e.g., bodies of the appended claims, are generally intended as "open" terms, e.g., the term "including" should be interpreted as "including but not limited to," the term "having" should be interpreted as "having at least," the term "includes" should be interpreted as "includes but is not limited to," etc. It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to implementations containing only one such recitation, even when the same claim includes the introductory phrases "one or more" or "at least one" and indefinite articles such as "a" or "an," e.g., "a" and/or "an" should be interpreted to mean "at least one" or "one or more;" the same holds true for the use of definite articles used to introduce claim recitations. In addition, even if a specific number of an introduced claim recitation is explicitly recited, those skilled in the art will recognize that such recitation should be interpreted to mean at least the recited number, e.g., the bare recitation of "two recitations," without other modifiers, means at least two recitations, or two or more recitations. Furthermore, in those instances where a convention analogous to "at least one of A, B, and C, etc." is used, in general such a construction is intended in the sense one having skill in the art would understand the convention, e.g., "a system having at least one of A, B, and C" would include but not be limited to systems that have A alone, B alone, C alone, A and B together, A and C together, B and C together, and/or A, B, and C together, etc. In those instances where a convention analogous to "at least one of A, B, or C, etc." is used, in general such a construction is intended in the sense one having skill in the art would understand the convention, e.g., "a system having at least one of A, B, or C" would include but not be limited to systems that have A alone, B alone, C alone, A and B together, A and C together, B and C together, and/or A, B, and C together, etc. It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

From the foregoing, it will be appreciated that various implementations of the present disclosure have been described herein for purposes of illustration, and that various modifications may be made without departing from the scope of the present disclosure. Accordingly, the various implementations disclosed herein are not intended to be limiting, with the true scope being indicated by the following claims.

## Claims

1. A method, comprising:
performing, by a processor of an apparatus functioning as an initiator, a one-to-many contention-based ranging operation (510) comprising:
generating, by the processor, a one-to-many initiator report (512); and
transmitting, by the processor, the one-to-many initiator report to a responder (514),
wherein the one-to-many initiator report contains a resolvable private address, in the following also referred to as RPA, hash calculated using an identity resolving key, in the following also referred to as IRK, of the responder.

2. The method of claim 1, wherein the one-to-many contention-based ranging operation further comprises, prior to generating and transmitting the one-to-many initiator report:
transmitting, by the processor, a one-to-many poll to one or more responders including the responder; and
receiving, by the processor, a response from at least one responder of the one or more responders immediately prior or responsive to transmitting the one-to-many poll.

3. The method of claim 2, wherein the generating of the one-to-many initiator report comprises:
decoding the response from the at least one responder; and
calculating the RPA hash using a respective IRK of the at least one responder in generating the one-to-many initiator report.

4. The method of any one of claims 1 to 3, wherein the performing of the one-to-many contention-based ranging operation comprises performing a contention-based one-to-many multi-millisecond, in the following also referred to as MMS, ranging operation.

5. A method, comprising:
performing, by a processor of an apparatus functioning as a responder, a one-to-many contention-based ranging operation (610) comprising:
receiving, by the processor, a one-to-many poll from an initiator (612); and
transmitting, by the processor, a response to the initiator immediately prior or responsive to receiving the one-to-many poll (614);
performing, by the processor, an Ultra-Wideband, in the following also referred to as UWB, packet transmission and reception with the initiator (616); and
receiving, by the processor, a one-to-many initiator report (618),
wherein the one-to-many initiator report contains a resolvable private address, in the following also referred to as RPA, hash calculated using an identity resolving key, in the following also referred to as IRK, of the responder or another responder.

6. The method of claim 5, wherein the one-to-many contention-based ranging operation further comprises:
determining, by the processor, a distance between the responder and the initiator based on the one-to-many initiator report.

7. The method of claim 5 or 6, wherein the performing of the one-to-many contention-based ranging operation comprises performing a contention-based one-to-many multi-millisecond, in the following also referred to as MMS, ranging operation.

8. A method, comprising:
receiving, by a processor of an apparatus, a physical-layer, in the following also referred to as PHY, service data unit, in the following also referred to as PSDU, as part of a channel impulse report, in the following also referred to as CIR, with CIR report taps compressed to enable decompression on a per receiver report, in the following also referred to as RR, basis (710); and
determining, by the processor, whether the PSDU contains a complete RR or a part of the complete RR based on an indication contained in the PSDU (720).

9. The method of claim 8, wherein the indication comprises two bits at a start of the PSDU.

10. The method of claim 8 or 9, wherein the indication indicates whether the PSDU contains the complete RR, a first part of the RR, or a second part of the RR.

11. The method of any one of claims 8 to 10, wherein the indication is in a Report Identity Control, in the following also referred to as RIC, field carried in the PSDU.

12. The method of any one of claims 8 to 11, wherein the indication is in a Receive Report Control, in the following also referred to as RRC, field carried in the PSDU.

13. The method of any one of claims 8 to 12, wherein the indication is in a Receive Report Description, in the following also referred to as RRD, field included in a segment of the RR.

14. The method of claim 13, wherein RRD bits are rearranged with one or more reserved bits moved to a front of the RR to serve as the indication.

15. The method of claim 13 or 14, wherein a length of the RRD field is relatively shorter in an event that the indication indicates that the PSDU contains a second fragment of the complete RR, and wherein the length of the RRD field is relatively longer in an event that the indication indicates that the PSDU contains the complete RR or a first fragment of the RR.
